# EUROPÄISCHE PATENTSCHRIFT

(11) **EP 1 621 426 B1**
(45) Veröffentlichungstag und Bekanntmachung des Hinweises auf die Patenterteilung: **09.07.2008**
(21) Anmeldenummer: 05015822.9
(22) Anmeldetag: 20.07.2005
(51) Int. Cl.: B60S 1/08, G01N 21/43

(54) **Sensoreinrichtung, Verwendung einer Sensoreinrichtung sowie Fahrzeugleuchte**
Sensor device, use of a sensor device and vehicular lamp
Dispositif de detection, utilisation d'un dispositif de detection et lampe de vehicule

(30) Priorität: 30.07.2004 DE 102004038422
(43) Veröffentlichungstag der Anmeldung: 01.02.2006
(73) Patentinhaber: odelo GmbH, 71409 Schwaikheim (DE)
(72) Erfinder: Mack, Bernd, 73630 Remshalden/Grunbach (DE)
(74) Vertreter: Kaufmann, Ursula Josefine

(56) Entgegenhaltungen:
- EP-A- 0 249 031
- EP-A- 0 412 653
- EP-A- 1 087 221
- ROBEL W ET AL: "SOME SAMPLES FOR THE DIMENSION OF THE DIAMETER ARE SHOWN IN THE NEXT TABLE:" ADVANCED MICROSYSTEMS FOR AUTOMOTIVE APPLICATIONS, SPRINGER,, DE, 1999, Seiten 154-156, XP000937949

## Beschreibung

Die Erfindung geht aus von einer Sensoreinrichtung, einer Verwendung einer Sensoreinrichtung sowie einer Fahrzeugleuchte nach den Oberbegriffen der unabhängigen Ansprüche.

Es ist bekannt, optoelektronische Sensoreinrichtungen als Schmutzdetektoren einzusetzen. Üblicherweise besteht eine solche Sensoreinrichtung aus einem strahlenleitfähigen Sensorkörper, in dem mindestens ein Strahlungssender angeordnet ist, welcher Prüflicht als paralleles Strahlenbündel durch eine am Sensorkörper angeordnete Prüffläche hindurch auf mindestens einen Strahlungsempfänger abbildet. Auf der Prüffläche abgelagerte Verschmutzungen beeinflussen die Intensität der vom Strahlungsempfänger aufgefangenen Strahlung. Aus der Patentschrift DE 197 13 910 C1 ist eine Sensoreinrichtung bekannt, bei der die Erzeugung und Fokussierung des parallelen Prüflichts innerhalb des Sensorkörpers erfolgt. Um eine geringe Bauhöhe zu erreichen, wird das Prüflicht an der Mantelfläche des Sensorkörpers totalreflektiert, wobei die Mantelfläche gleichzeitig so ausgebildet ist, dass das vom Strahlungssender ausgesandte Strahlenbündel ausreichend fokussiert und auf den Strahlungsempfänger geleitet wird. Die Sendeeinheit und die Empfängereinheit müssen daher entsprechend genau bei der Montage in die Sensoreinrichtung justiert werden.

Derartige Sensoren sind auch aus der EP-A-1087221, EP-A-0412653, EP-A-0249031 sowie dem Artikel von W. Robel et al., Advanced Microsystems for Automotive Applications, Springer Verlag, 1999, Seiten 154-156, bekannt.

Die EP-A-0412653 und die EP-A-0249031 offenbaren einen Schmutzsensor mit einer Sensoreinrichtung, die an einer Streuscheibe angesetzt ist. Ein Sender sendet Strahlung aus, die an einer äußeren Oberfläche abhängig von dort befindlichen Partikeln zu einem Empfänger reflektiert wird. Die äußere plane Oberfläche der Streuscheibe bildet die Prüffläche. Kritisch ist dabei die genaue Justage von Sender und Empfänger zur Streuscheibe.

In dem Artikel von W. Robel ist ein entsprechender Schmutzsensor offenbart, bei dem die Prüffläche so gewölbt ist, dass die Strahlung des Senders aus dem Sensorkörper austritt, über die Prüffläche geleitet wird und wieder in den Sensorkörper eintritt und zum Empfänger gelangt. Dabei wird die Strahlung im Bereich der gewölbten Prüffläche außerhalb des Sensorkörpers in Luft geführt.

Die EP-A-1087221, von der die Erfindung ausgeht, offenbart eine Sensoreinrichtung mit einem innerhalb eines Sensorkörpers angeordneten Sender und einem dem Sender zugeordneten, innerhalb des Sensorkörpers angeordneten Empfänger. An einer Stirnseite des Sensorkörpers ist eine kuhlenförmige Prüffläche angeordnet. Sender und Empfänger sind in Ausnehmungen des Sensorkörpers an einer entgegengesetzten Stirnseite eingelassen. Vom Sender ausgesandte Strahlung wird an der Mantelfläche des Sensorkörpers reflektiert und nach außen geleitet, wo sie im Außenraum über die Prüffläche geführt wird und wieder in den Sensorkörper eintritt und zum Empfänger umgeleitet wird. Kritisch ist hierbei das Gewährleisten der Reflexionsbedingungen an der Mantelfläche des Sensorkörpers.

Aufgabe der Erfindung ist die Schaffung einer Sensoreinrichtung, die einen kompakten Aufbau bei geringen Anforderungen an montageabhängige Toleranzen ermöglicht, sowie eine Verwendung der Sensoreinrichtung als auch eine Fahrzeugleuchte anzugeben.

Die Aufgabe wird erfindungsgemäß mit den Merkmalen der unabhängigen Ansprüche gelöst.

Eine erfindungsgemäße Sensoreinrichtung weist wenigstens eine in einem Sensorkörper angeordnete Sendeeinheit und eine der Sendeeinheit zugeordnete, in dem Sensorkörper angeordnete Empfängereinheit sowie eine zwischen Sendeeinheit und Empfängereinheit angeordnete Prüffläche auf.

Es wird gemäß einem ersten Aspekt der Erfindung vorgeschlagen, dass die Sendeeinheit und/oder die Empfängereinheit aus einem Spritzgussteil mit eingelegtem Strahlungssender und/oder Strahlungsempfänger gebildet sind, wobei die Prüffläche durch eine Austrittsfläche der Sendeeinheit und eine Eintrittsfläche der Empfängereinheit gebildet ist. Dadurch kann nicht nur eine Verschmutzung festgestellt werden, die an der Prüffläche haftet, sondern auch das Volumen zwischen der austrittsflächenseitigen Prüffläche und der eintrittsflächenseitigen Prüffläche untersucht werden. So kann beispielsweise Nebel oder Rauch detektiert werden. Das Spritzgussteil enthält wesentliche optische Komponenten der Sendeeinheit bzw. Empfängereinheit wie etwa Reflektoren, Linsen und dergleichen und kann unabhängig vom eigentlichen Sensorkörper gebildet werden, der auf eine einfache Trägerfunktion beschränkt werden kann. Die in das Sendeeinheit bzw. Empfängereinheit bildende Spritzgussteil integrierten optischen Komponenten sind bereits bei der Herstellung des Spritzgussteils ausrichtbar und justierbar und damit völlig unabhängig von dem Sensorkörper der Sensoreinrichtung. Damit können vorteilhaft komplexe Messaufgaben integriert in größere Systeme erfüllt werden. Insbesondere kann ein Strahlengang außerhalb des Sensorkörpers verlaufen. Aufwändige optische Einrichtungen im eigentlichen Sensorkörper, wie Verspiegelungen, Linsen und dergleichen, können entfallen. Die Sensoreinrichtung kann mit weitgehender Gestaltungsfreiheit ausgestaltet werden, da die optischen Eigenschaften der Sensoreinrichtung vom Sensorkörper entkoppelt sind. Mit einem Spritzguss-Verfahren können sehr hochwertige optische Komponenten gefertigt werden.

Vorzugsweise sind mehrere Sendeeinheiten und/oder mehrere Empfängereinheiten und/oder eine Kombination aus einer oder mehreren Sendeeinheiten und einer oder mehreren Empfängereinheiten innerhalb eines Spritzgussteils angeordnet.

Es wird gemäß einem weiteren Aspekt der Erfindung vorgeschlagen, dass eine von der Sendeeinheit zur Empfängereinheit ausgesandte Strahlung im Wesentlichen in einem Strahlengang außerhalb des Sensorkörpers verläuft, wobei die Prüffläche durch eine Austrittsfläche der Sendeeinheit und eine Eintrittsfläche der Empfängereinheit gebildet ist.. Dadurch, dass die Austrittsfläche der Sendeeinheit und die Eintrittsfläche der Empfängereinheit für Strahlung die Prüffläche bilden, kann nicht nur eine Verschmutzung festgestellt werden, die an der Prüffläche haftet, sondern auch das Volumen zwischen der austrittsflächenseitigen Prüffläche und der eintrittsflächenseitigen Prüffläche untersucht werden. So kann beispielsweise Nebel oder Rauch detektiert werden. Austrittsfläche und Eintrittsfläche liegen vorzugsweise innerhalb einer Stirnfläche des Sensorkörpers. Eine Ablagerung auf der Austrittsfläche und/oder Eintrittsfläche verursacht eine Verminderung der über den Strahlengang gesandten Strahlung, die als Verschmutzung erkannt wird. Weiterhin ist die Messgenauigkeit proportional zu der Größe der Prüffläche. Vorteilhaft ist es daher, die Austrittsfläche und die Eintrittsfläche soweit zu vergrößern, dass sie einen möglichst großen Anteil an der Sensorfläche einnimmt und/oder eine zusätzliche Fläche als zusätzliche Prüffläche in den Strahlengang einzubringen. In diesem Fall kann die Prüffläche vergrößert werden, ohne den Durchmesser des Sensorkörpers vergrößern zu müssen. Insbesondere als Spritzgussteile ausgebildete Sendeeinheiten und/oder Empfängereinheiten mit integrierter Optik können gewährleisten, dass der Sensorkörper vorteilhaft vom Strahlengang entkoppelbar ist.

Der Sensorkörper selbst kann frei von optisch wirksamen Flächen gehalten werden, insbesondere entfällt die Notwendigkeit, umfangseitige Mantelflächen des Sensorkörpers als Reflektoren auszubilden. Die Montage der Sensoreinrichtung wird erheblich vereinfacht, da bei der Montage der Sensoreinrichtung keine Justierung der optischen Elemente bezüglich der Sendeeinheit und der Empfängereinheit mehr notwendig ist. Vielmehr sind die Optikeinrichtungen von Sendeeinheit und/oder Empfängereinheit unabhängig von dem Sensorkörper. Dieser kann daher an sich beliebige Formen aufweisen und insbesondere sehr flach ausgebildet sein. Femer ist die Messgenauigkeit verbessert, da Justierungsfehler bei der Montage entfallen. Ebenso braucht der Sensorkörper nicht als Lichtleitkörper ausgebildet zu sein. Er kann bei Bedarf auch für die verwendete Strahlung nur teildurchlässig oder sogar auch undurchlässig sein. Der Sensorkörper kann unabhängig von einer Messmimik aus Sendeeinheit und Empfängereinheit gestaltet werden. Günstigerweise liegt der Sensorkörper mit seiner Mantelfläche außerhalb des Strahlengangs, so dass die von der Sendeeinheit zur Empfängereinheit abgestrahlte Strahlung nicht an der Mantelfläche reflektiert wird oder werden muss.

Vorzugsweise weist die Sendeeinheit eine Strahlungsquelle mit integrierter Optikeinrichtung und/oder die Empfängereinheit einen Strahlungsempfänger mit integrierter Optikeinrichtung auf. Die Sendeeinheit und/oder die Empfängereinheit sind jeweils individuell als Modul ausgebildet und mit einer eigenen Optik versehen, die unabhängig von dem Sensorkörper ist. Eine optische Justage ist vorteilhafterweise unabhängig vom Sensorkörper und kann individuell für die Sendeeinheit und/oder die Empfängereinheit vorgenommen werden. Bevorzugt ist die Sendeeinheit und/oder die Empfängereinheit aus jeweils einem in den Sensorkörper eingesetzten und umspritzten Halbleiterchip mit an diesen angepasster Optik gebildet. Vorzugsweise ist der Strahlungssender eine Leuchtdiode, insbesondere eine Infrarot emittierende LED, und der Strahlungsempfänger ein lichtempfindliches Element, vorzugsweise eine PIN-Diode. Die Sendeeinheit und/oder Empfängereinheit ist dann fest mit dem Sensorkörper verbunden, ohne auf dessen optische Eigenschaften angewiesen zu sein, und doch gleichzeitig auch bei rauen Einsatzbedingungen vor Beschädigung und Verschmutzung durch den Sensorkörper **ge**schützt. Der Sensorkörper dient im Wesentlichen als Halterung für die Sendeeinheit und die Empfängereinheit.

Weist die Sendeeinheit einen Strahlungssender auf, der in seinem Nahbereich von einer optisch wirksamen Fläche umgeben ist, kann die Sendeeinheit als Modul unabhängig von optischen Eigenschaften des Sensorkörpers hergestellt bzw. montiert und betrieben werden, wobei vorteilhaft die Montage vereinfacht ist, da eine genaue Justierung des Strahlungssenders und seiner zugehörigen optisch wirksamen Flächen insbesondere zur Reflexion und/oder Parallelisierung und/oder zum Strahlungsaustritt aus der Sendeeinheit entfallen kann, da Strahlungssender und optisch wirksame Flächen eine Einheit mit der Sendeeinheit bilden, welche als Ganzes mit dem Sensorkörper verbunden werden kann.

Weist die Empfängereinheit einen Strahlungsempfänger auf, der in seinem Nahbereich von einer optisch wirksamen Fläche umgeben ist, kann die Empfängereinheit als Modul unabhängig von optischen Eigenschaften des Sensorkörpers betrieben werden, wobei vorteilhaft die Montage vereinfacht ist, da eine genaue Justierung des Strahlungsempfängers und seiner zugehörigen optisch wirksamen Flächen insbesondere zur Reflexion und/oder Parallelisierung und/oder zum Strahlungseintritt in die Empfängereinheit entfallen kann, da Strahlungsempfänger und optisch wirksame Flächen eine Einheit mit der Empfängereinheit bilden, welche als Ganzes mit dem Sensorkörper verbunden werden kann.

Vorzugsweise ist jeweils innerhalb der optisch wirksamen Fläche von Sendeeinheit und/oder Empfängereinheit ein Strahlungsleitkörper angeordnet, wobei besonders bevorzugt der Strahlungsleitkörper getrennt von dem Sensorkörper ist, so dass der Strahlungsleitkörper im Wesentlichen unabhängig von Eigenschaften des Sensorkörpers ist. Der Lichtleitkörper sowie die optisch wirksame Fläche der Sendeeinheit dienen dazu, ein vom Strahlungssender ausgehendes Strahlungsbündel zu parallelisieren und so auf die zugehörige, als Prüffläche fungierende Austrittsfläche, zu verteilen, dass es möglichst vollständig über den Strahlengang auf die zugehörige, als Prüffläche dienende Eintrittsfläche der Empfängereinheit gestrahlt wird. Eine möglichst homogene Verteilung auf den Prüfflächen und eine möglichst verlustarme Übertragung des Strahlungsbündels, insbesondere eine Vermeidung von Streustrahlung, sind sehr vorteilhaft für eine hohe Messgenauigkeit der erfindungsgemäßen Sensoreinrichtung. Umgekehrt ist es Aufgabe des Strahlungsleitkörpers sowie der optisch wirksamen Fläche der Empfängereinheit, das auf die Messfläche aufreffende Strahlungsbündel auf eine aktive Fläche des Strahlungsempfängers zu bündeln. Dabei sind mehrere Varianten denkbar, etwa nur Strahlungsleitkörper oder nur optisch wirksame Flächen, insbesondere wenn eine Prüffläche getrennt von der Austrittsfläche und/oder der Eintrittsfläche der Sendeeinheit bzw. der Empfängereinheit verfügbar ist, oder auch Kombinationen aus beiden bei der Empfängereinheit und/oder der Sendeeinheit vorzusehen.

In einer sehr günstigen Ausgestaltung sind sowohl Sendeeinheit als auch Empfängereinheit dergestalt ausgebildet und in den Sensorkörper integriert. Es ist grundsätzlich jedoch denkbar, dass nur die Sendeeinheit oder nur die Empfängereinheit in dieser Ausgestaltung in den Sensorkörper integriert ist.

Eine besonders flache Bauweise ergibt sich, wenn die Sendeeinheit und/oder die Empfängereinheit in einem oberflächennahen Bereich der Stirnfläche angeordnet sind. Der Sensorkörper kann praktisch unabhängig von der Sendeeinheit und/oder der Empfängereinheit gestaltet werden. Günstigerweise können mehrere Sendeeinheiten und Empfängereinheiten in der Stirnfläche angeordnet sein. Diese können vorteilhaft kreisförmig, etwa bei einem runden Sensorkörper angeordnet sein. Es ist jedoch auch denkbar, Sendeeinheiten und/oder Empfängereinheiten anders, beispielsweise parallel auf jeweils einer Linie anzuordnen. Dadurch können für unterschiedliche Messaufgaben optimierte Messbedingungen geschaffen werden. Durch die modulare Ausbildung der Sendeeinheiten und Empfängereinheiten und der Entkopplung der optisch wirksamen Flächen und des Lichtleitkörpers vom Sensorkörper kann die Baugröße der Sensoreinrichtung stark verkleinert werden. Das Montagekonzept kann vereinfacht werden; Aufbau und Verbindungstechnik werden vereinfacht.

Die Sendeeinheit und/oder die Empfängereinheit können mit ihrer Strahlungsaustrittsfläche bzw. Strahlungseinrittsfläche im Wesentlichen mit der Stirnfläche fluchten. Beispielsweise kann die Stirnfläche nach dem Montieren der Sendeeinheit und/oder Empfängereinheit insgesamt überarbeitet werden. Es ist jedoch auch möglich, dass die Sendeeinheit und/oder Empfängereinheit in einem Winkel zur Stirnfläche angeordnet ist. Dies kann abhängig von dem beabsichtigten Messaufbau und/oder der Verwendung ausgewählt werden, um Anlagerungen auf und/oder einen Zustand der Prüffläche zu erfassen.

In einer günstigen Weiterbildung ist zwischen Sendeeinheit und Empfängereinheit mindestens eine isolierte Erhebung der Stirnfläche so angeordnet, dass von der Sendeeinheit ausgehende und auf die Empfängereinheit auftreffende Strahlung durch die Erhebung tritt. Die Erhebung kann vorzugsweise angeformt oder auch angefügt sein. Zweckmäßigerweise ist dann der Sensorkörper wenigstens teilweise durchlässig für die Strahlung der Sendeeinheit. Durch die Erhebung wird die Prüffläche vergrößert, so dass die Messempfindlichkeit und die Messgenauigkeit verbessert werden. Optional können zwischen Sendeeinheit und Empfängereinheit mehrere derartige, beispielsweise als Ringe ausgebildete Erhebungen vorgesehen sein, um die Prüffläche entsprechend zu vergrößern. Besonders vorteilhaft ist, wenn die Erhebungen bei einer optischen Auslegung mit berücksichtigt werden und insbesondere in eine Berechnung der optischen Eigenschaften mit einbezogen werden. Hierdurch kann die Messgenauigkeit ohne Vergrößerung der Abmaße der Sensoreinrichtung verbessert werden. Damit kann eine Sensoreinrichtung geschaffen werden, welche bei hoher Messgenauigkeit und Auflösung sehr klein und kompakt baut.

Ist die Erhebung um eine Symmetrieachse angeordnet, wobei Sendeeinheit und Empfängereinheit zu beiden Seiten der Symmetrieachse angeordnet sind, kann die Erhebung beispielsweise symmetrisch um diese Symmetrieachse als Ringwulst ausgebildet sein. Ein Werkzeug zum Fertigen des Sensorkörpers bzw. dessen Stirnfläche kann einfach gestaltet sein, insbesondere kann die Stirnfläche mittels Fräsen und/oder als Drehteil gefertigt sein.

Optional kann der Sensorkörper als Gussteil oder Spritzgussteil gefertigt werden, wobei die Guss- oder Spritzform entsprechend ausgebildet ist. In einer günstigen Weiterbildung können eine oder mehrere Sendeeinheiten und/oder eine oder mehrere Empfängereinheiten und der Sensorkörper in einem einzigen Spritzgussteil integriert sein.

Optional können entlang des Umfangs des Sensorkörpers eine Mehrzahl von Sendeeinheiten und Empfängereinheiten angeordnet sein, wobei vorzugsweise jeweils eine Sendeeinheit mit einer ihr an der Stirnfläche gegenüberliegenden Empfängereinheit zusammenwirkt.

Grundsätzlich kann der Sensorkörper beliebig ausgebildet sein, beispielsweise scheibenförmig, wobei dessen Durchmesser mindestens so groß ist wie dessen Höhe, bevorzugt ist der Durchmesser deutlich größer ist als dessen Höhe, oder alternativ beliebige Formen aufweisen. Der Fachmann wird eine geeignete Form hinsichtlich des optische Aussehens oder der Anmutung des Gesamtsystems auswählen, beispielsweise bei einem Fahrzeug mit einer erfindungsgemäßen Sensoreinrichtung, dessen Aussehen möglicherweise durch eine zu große Sensoreinrichtung beeinträchtigt werden könnte. Ebenso wird eine geeignete Gestalt passend zum Einsatzzweck gewählt werden und beispielsweise bei einem Einsatz in einem Fahrzeug eine leicht zugängliche Oberfläche bieten, die durch übliche Reinigungseinrichtungen wie eine Waschanlage leicht zu reinigen ist und damit eine Oberfläche bietet, die repräsentativ beispielsweise für den Grad einer aktuellen Verschmutzung ist.

Die Stirnfläche und/oder der Sensorkörper kann bedarfsabhängig und frei gestaltet werden. Vorzugsweise weist die Stirnfläche und/oder der Sensorkörper einen Freiform-Querschnitt auf, beispielsweise kann ein runder, ovaler oder beispielsweise ein eckiger Querschnitt vorgesehen sein.

Bevorzugt wird die Sensoreinrichtung in einer Fahrzeugkomponente eingesetzt, besonders bevorzugt in einem Fahrzeugscheinwerfer integriert. Ganz besonders bevorzugt ist ein Heckscheinwerfer oder ein Frontscheinwerfer mit integrierter Sensoreinrichtung. Vorteilhaft kann etwa die Leuchtstärke eines Scheinwerfers abhängig von dessen Verschmutzungsgrad oder Belegungsgrad eingestellt oder aber gegebenenfalls eine Reinigungsprozedur abhängig von einem Signal der Sensoreinrichtung ausgelöst werden. Beispielsweise kann eine Scheinwerferwascheinrichtung in Betrieb gesetzt oder ein Alarm, dass ein Scheinwerfer verschmutzt ist, an den Fahrer ausgegeben werden.

In einer günstigen Ausgestaltung können innerhalb des Sensorkörpers weitere Sensoren, beispielsweise ein Helligkeitssensor, oder Funktionseinheit, beispielsweise eine Leuchtsignalfunktionseinheit einer Heckleuchte, integriert sein. Insbesondere kann die Sensoreinrichtung zusammen mit wenigstens einem weiteren Sensor, beispielsweise einem Entfernungssensor, in einer Sensorvorrichtung zusammengefasst sein. Ebenso kann die Sensoreinrichtung selbst in einem Sensor oder einer Funktionseinheit integriert sein. So kann die Sensoreinrichtung gleichzeitig Teil eines größeren Systems sein, etwa einer Lichtscheibe einer Heckleuchte eines Fahrzeugs oder einer anderen Leuchte eines Fahrzeugs. Besonders vorteilhaft ist, wenn die Sensoreinrichtung oder ein Bestandteil dieser als Spritzgussteil ausgebildet ist und in einem größeren System integriert ist und die Eigenschaften des Spritzgussteils in einer Berechnung des optischen Strahlengangs des größeren Systems, beispielsweise besagter Lichtscheibe einer Heckleuchte, berücksichtigt sind. Bevorzugt ist eine Verwendung der Sensoreinrichtung in oder mit einem anderen Sensor, insbesondere einem Helligkeitssensor, in einer Sensorvorrichtung oder in einem System, insbesondere einer Lichtscheibe einer Leuchte eines Fahrzeugs, oder integriert in oder mit einer Funktionseinheit, insbesondere einer Leuchtsignalfunktionseinheit.

Ferner kann eine kompakte Einrichtung geschaffen werden, wenn innerhalb der Sensoreinrichtung eine Auswerteinheit für die Sensorsignale integriert ist.

In einer günstigen Ausgestaltung können mehrere Strahlungssender und/oder Empfängereinheiten innerhalb einer Sendeeinheit und/oder einer Empfängereinheit angeordnet sein. Vorteilhaft ist auch, wenn einer Sendeeinheit mehrere Empfängereinheiten und/oder einer Empfängereinheit mehrere Sendeeinheiten zugeordnet sind. Der Strahlengang verteilt sich dann von einer auf mehrere optische Einrichtungen, von mehreren auf eine optische Einrichtung oder von mehreren auf mehrere optische Einrichtungen. Dadurch kann die Empfindlichkeit der Sensoreinrichtung erhöht werden und eine Vielzahl von Messaufgaben unter unterschiedlichsten geometrischen Randbedingungen erfüllt werden.

Die Sensoreinrichtung kann vorteilhaft außerhalb der Stirnfläche des Sensors für die eigentliche optische Sensorfunktion irrelevante Elemente aufweisen, um einem Design oder Wunschanforderungen des Aussehens zu genügen. Ebenso können auch innerhalb der Stirnfläche für die optische Sensorfunktion irrelevante Elemente und/oder für die Sensorfunktion neutrale Elemente angefügt oder aufgetragen sein, beispielsweise ein Emblem. Die Elemente können transparent oder teiltransparent oder auch undurchlässig für die in der Sensoreinrichtung verwendete Strahlung sein.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Längsschnitt durch eine bevorzugte Sensoreinrichtung mit einer gewölbten Stirnfläche,
- Fig. 2: eine Draufsicht auf eine bevorzugte Sensoreinrichtung mit einer Mehrzahl von Sendeeinheiten und Empfängereinheiten,
- Fig. 3: einen Längsschnitt durch eine bevorzugte Sensoreinrichtung mit einer isolierten Erhebung als zusätzliche Prüffläche,
- Fig. 4: eine Draufsicht auf die bevorzugte Sensoreinrichtung in Figur 3,
- Fig. 5: eine Draufsicht auf einen Sensorkörper mit einem eckigem Querschnitt.

In den Figuren sind gleiche oder im Wesentlichen gleich bleibende Teile grundsätzlich mit den gleichen Bezugszeichen beziffert.

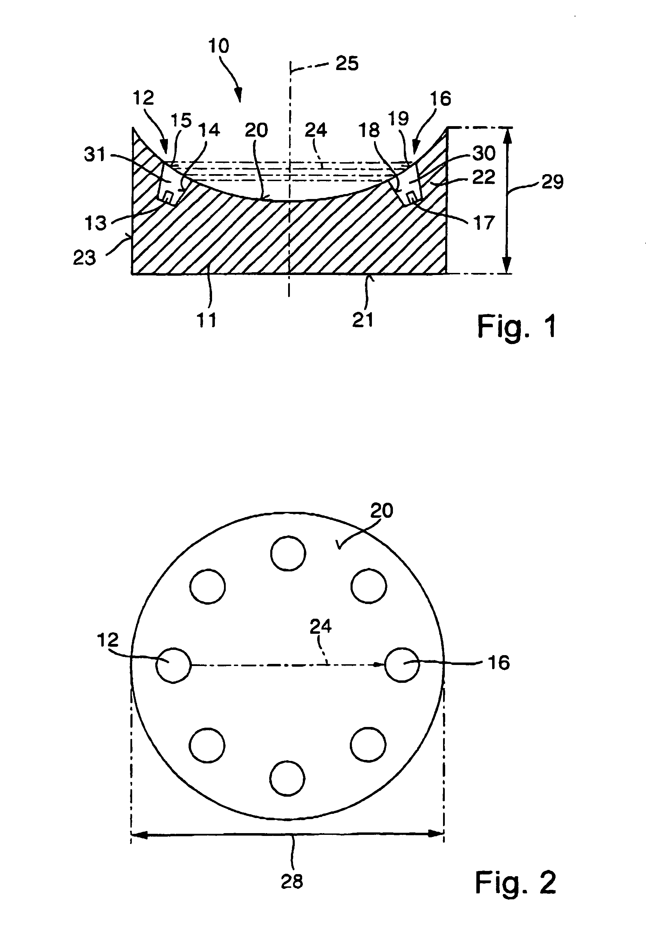

Figur 1 zeigt einen Längsschnitt durch eine bevorzugte Sensoreinrichtung 10 mit einer konkav gewölbten Stirnfläche 20. Die Sensoreinrichtung 10 weist eine in einem Sensorkörper 11 angeordnete Sendeeinheit 12 und eine der Sendeeinheit 12 zugeordnete, in dem Sensorkörper 11 angeordnete Empfängereinheit 16 auf. Die Sendeeinheit 12 und die Empfängereinheit 16 liegen sich an der Stirnfläche 20 gegenüber, welche zwischen der Sendeeinheit 12 und der Empfängereinheit 16 angeordnet ist, und welche eine äußere Grenzfläche des Sensorkörpers 11 bildet. Von der Sendeeinheit 12 ausgesandte Strahlung tritt durch eine Austrittsfläche 15 aus der Sendeeinheit 12 aus und durch eine Eintrittsfläche 19 in die Empfängereinheit 16 ein. Die Austrittsfläche 15 und die Eintrittsfläche 19 bilden Prüfflächen der Sensoreinrichtung 10. Mittels der von der Sendeeinheit 12 in einem Strahlengang 24 ausgesandte Strahlung, beispielsweise Infrarot oder Strahlung im optischen Wellenlängenbereich, wird eine Belegung oder eine Verschmutzung der Prüfflächen 15, 19 detektiert. Mit einer nicht dargestellten Elektronik kann die Sendeeinheit 12 und/oder Empfängereinheit 16 angesteuert bzw. Messsignale der Empfängereinheit 16 in an sich bekannter Weise ausgewertet werden.

Die Sendeeinheit 12 und die Empfängereinheit 16 sind jeweils aus einem bevorzugten Spritzgussteil ausgebildet, in welches ein Strahlungssender 13 in der Sendeeinheit 12 bzw. ein Strahlungsempfänger 17 in der Empfängereinheit 16 eingelegt ist.

Die Sendeeinheit 12 und die Empfängereinheit 16 sind achssymmetrisch zu einer Symmetrieachse 25 angeordnet. Die von der Sendeeinheit 12 zur Empfängereinheit 16 ausgesandte Strahlung verläuft im Wesentlichen außerhalb des Sensorkörpers 11. Die Sendeeinheit 12 umfasst eine Strahlungsquelle mit integrierter Optikeinrichtung, wobei die Sendeeinheit 12 einen Strahlungssender 13 aufweist, der in seinem Nahbereich von einer optisch wirksamen Fläche 14 umgeben und wobei innerhalb der optisch wirksamen Fläche 14 ein Strahlungsleitkörper 30 angeordnet ist. Der Strahlungsleitkörper 30 ist **ge**trennt von dem eigentlichen Sensorkörper 11, so dass die Sendeeinheit 12 quasi als Modul, insbesondere als Spritzgussteil, in den Sensorkörper 11 eingefügt ist.

Die Empfängereinheit 16 ist analog aufgebaut und umfasst einen Strahlungsempfänger 17 mit integrierter Optikeinrichtung, wobei die Empfängereinheit 16 ebenfalls in ihrem Nahbereich von einer optisch wirksamen Fläche 18 umgeben ist, innerhalb derer ein vom Sensorkörper 11 getrennter Strahlungsleitkörper 31 angeordnet ist. Vom Strahlungssender 13 ausgesandte Strahlung wird an der optisch wirksamen Fläche 14 reflektiert, durch den Strahlungsleitkörper 30 geleitet und verlässt durch eine Austrittsfläche 15 die Sendeeinheit 12. Entsprechend wird auf eine Eintrittsfläche 19 der Empfängereinheit 16 auftreffende Strahlung durch den Lichtleitkörper 31 und gegebenenfalls durch Reflexion an der optisch wirksamen Fläche 18 zum Strahlungsempfänger 17 geleitet. Die Empfängereinheit 16 ist insbesondere als Spritzgussteil ausgebildet.

Im Strahlengang 24 wird die Strahlung als Strahlungsbündel von der Sendeeinheit 12 zur Empfängereinheit 16 gesendet, wobei die Optik der Sendeeinheit 12 die Sendestrahlung des Strahlungssenders 13 entsprechend innerhalb des Lichtleitkörpers 30 umlenkt, parallelisiert und bündelt und durch ihre Austrittsfläche 15 aussendet. Die Austrittsfläche 15 kann dazu geeignet strukturiert sein, beispielsweise in der Art einer Fresnellinse. Die Optik, insbesondere die optisch wirksame Fläche 14, ist so gestaltet, dass die Strahlung nur in Richtung Empfängereinheit 16 austritt. Die Empfängereinheit 16 weist in ihrem Lichtleitkörper 31 eine entsprechende geeignete Optik auf, die die in deren Eintrittsfläche 19 eintretende Strahlung zum Strahlungsempfänger 17 leitet. Auch hier kann die Eintrittsfläche 19 geeignet strukturiert sein.

Die Sendeeinheit 12 und die Empfängereinheit 16 sind in einem oberflächennahen Bereich 22 der Stirnfläche 20 angeordnet. Die Sendeeinheit 12 und/oder die Empfängereinheit 16 fluchten mit ihrer Austrittsfläche 15 bzw. Eintrittsfläche 19 im Wesentlichen mit der Stirnfläche 20. Die Stirnfläche 20 ist zweckmäßigerweise bezogen auf die Sendeeinheit 12 und die Empfängereinheit 16 konkav gewölbt, wobei deren Form beliebig, beispielsweise parabolisch oder auch kugelförmig sein kann.

Eine Mantelfläche 23 des Sensorkörpers 11 liegt außerhalb des Strahlengangs 24 und kann ebenfalls beliebig geformt und ausgestaltet sein. Im Gegensatz zum Stand der Technik ist eine Umlenkung oder gar eine Totalreflexion der Strahlung an der Mantelfläche 23 nicht notwendig. Ebenso wenig ist die Rückseite 21 des Sensorkörpers 11 an der Ausbreitung und/oder Reflexion der Strahlung beteiligt.

Der Sensorkörper 11 ist beispielsweise scheibenförmig ausgebildet, wobei dessen Durchmesser 28 deutlich größer ist wie dessen Höhe 29.

Eine Draufsicht auf eine bevorzugte Sensoreinrichtung 10 mit einer Mehrzahl von sich paarweise gegenüberliegenden Sendeeinheiten 12 und Empfängereinheiten 16 ist in Figur 2 dargestellt, wobei jeweils eine Sendeeinheit 12 mit der auf der anderen Seite der Stirnfläche 20 gegenüberliegenden Empfängereinheit 16 ein Paar bildet. Sendeeinheiten 12 und Empfängereinheiten 16 sind kreisförmig angeordnet. Selbstverständlich können die Sendeeinheiten 12 und Empfängereinheiten 16 auch in anderer Geometrie angeordnet sein, beispielsweise linienförmig. Von der Mehrzahl der Sendeeinheiten 12 und Empfängereinheiten 16 ist der Übersichtlichkeit wegen nur eine Sendeeinheit 12 und eine Empfängereinheit 16, zwischen denen ein Strahlenbündel im Strahlengang 24 verläuft, mit Bezugszeichen beziffert. Durch die modulare Ausbildung der Sendeeinheiten 12 und Empfängereinheiten 16, insbesondere als Spritzgussteile mit eingelegtem Strahlungssender bzw. Strahlungsempfänger und integrierter Optik, und der Entkopplung der optisch wirksamen Flächen 14, 18 und des Lichtleitkörpers 30, 31 vom Sensorkörper 11 kann die Baugröße der Sensoreinrichtung 10 stark verkleinert werden.

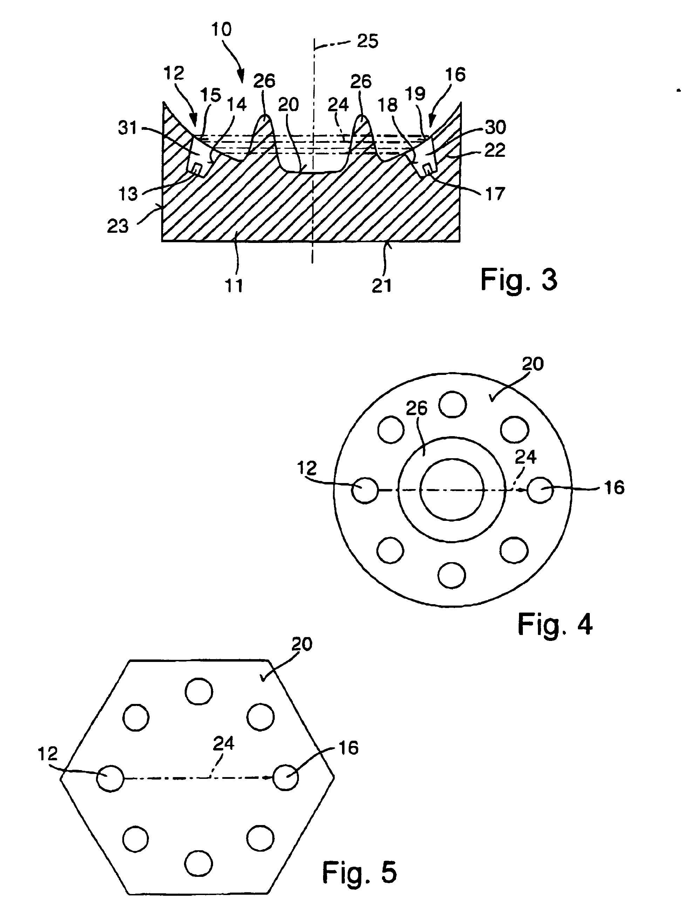

Figur 3 zeigt einen Längsschnitt durch eine bevorzugte Sensoreinrichtung 10 mit zwei isolierten Erhebungen 26 in einer Stirnfläche 20 und Figur 4 zeigt eine Draufsicht auf die Sensoreinrichtung 10 der Figur 3. Analog zu Figur 2 sind eine Vielzahl von sich gegenüberliegenden Sendeeinheiten 12 und Empfängereinheiten 16 in der Stirnfläche 20 vorgesehen. Die Erhebungen 26 in Figur 3 entsprechen einem ringförmigen Wulst um eine Symmetrieachse 25, wobei die seitlichen Flanken der Erhebungen 26 die Prüffläche vergrößern. Die Erhebung 26 zwischen Sendeeinheit 12 und Empfängereinheit 16 ist so angeordnet, dass von der Sendeeinheit 12 ausgehende und auf die Empfängereinheit 16 gerichtete Strahlung durch die Erhebung 26 tritt. Die Erhebung 26 um die Symmetrieachse 25 angeordnet, wobei Sendeeinheit 12 und Empfängereinheit 16 zu beiden Seiten der Symmetrieachse 25 angeordnet sind. Sendeeinheit 12 und Empfängereinheit 16 sind insbesondere als Spritzgussteile mit eingelegtem Strahlungssender bzw. Strahlungsempfänger und integrierter Optik ausgebildet.

Figur 5 zeigt beispielhaft eine Draufsicht auf einen Sensorkörper 11 mit eckigem Querschnitt. Selbstverständlich kann eine prüfflächenvergrößernde Struktur auf der Stirnfläche 20 analog zum Ausführungsbeispiel in den Figuren 3 und 4 vorgesehen sein. Sendeeinheit 12 und Empfängereinheit 16 sind auch hier insbesondere als Spritzgussteile mit eingelegtem Strahlungssender bzw. Strahlungsempfänger und integrierter Optik ausgebildet.

### Bezugszeichenliste

- 10: Sensoreinrichtung
- 11: Sensorkörper
- 12: Sendeeinheit
- 13: Strahlungssender
- 14: optisch wirksame Fläche
- 15: Austrittsfläche
- 16: Empfängereinheit
- 17: Strahlungsempfänger
- 18: optisch wirksame Fläche
- 19: Eintrittsfläche
- 20: Stirnfläche
- 21: Rückseite
- 22: oberflächennaher Bereich
- 23: Mantelfläche
- 24: Strahlengang
- 25: Symmetrieachse
- 26: Erhebung
- 28: Höhe
- 29: Durchmesser

## Patentansprüche

1. Sensoreinrichtung mit wenigstens einer innerhalb einem Sensorkörper (11) angeordneten Sendeeinheit (12) und wenigstens einer der Sendeeinheit (12) zugeordneten, innerhalb des Sensorkörpers (11) angeordneten Empfängereinheit (16) sowie einer zwischen Sendeeinheit (12) und Empfängereinheit (16) angeordneten Prüffläche (15, 19), **dadurch gekennzeichnet, dass** die Sendeeinheit (12) und/oder die Empfängereinheit (16) aus einem Spritzgussteil mit eingelegtem Strahlungssender (13) und/oder Strahlungsempfänger (17) ausgebildet ist, wobei die Prüffläche (15, 19) durch eine Austrittsfläche (15) der Sendeeinheit (12) und eine Eintrittsfläche (19) der Empfängereinheit (16) gebildet ist.

2. Sensoreinrichtung nach Anspruch 1, **dadurch gekennzeichnet, dass** mehrere Sendeeinheiten (12) und/oder mehrere Empfängereinheiten (16) und/oder eine Kombination aus einer oder mehreren Sendeeinheiten (12) und einer oder mehreren Empfängereinheiten (16) innerhalb eines Spritzgussteils angeordnet sind.

3. Sensoreinrichtung mit wenigstens einer innerhalb einem Sensorkörper (11) angeordneten Sendeeinheit (12) und wenigstens einer der Sendeeinheit (12) zugeordneten, innerhalb des Sensorkörpers (11) angeordneten Empfängereinheit (16) sowie einer zwischen Sendeeinheit (12) und Empfängereinheit (16) angeordneten Prüffläche (15, 19), **dadurch gekennzeichnet, dass** eine von der Sendeeinheit (12) zur Empfängereinheit (16) ausgesandte Strahlung im Wesentlichen in einem Strahlengang (24) außerhalb des Sensorkörpers (11) verläuft und die Prüffläche (15, 19) durch eine Austrittsfläche (15) der Sendeeinheit (12) und eine Eintrittsfläche (19) der Empfängereinheit (16) gebildet ist.

4. Sensoreinrichtung nach einem der vorhergehenden Ansprüche, **dadurch gekennzeichnet, dass** die Sendeeinheit (12) den Strahlungssender (13) mit integrierter Optikeinrichtung umfasst.

5. Sensoreinrichtung nach einem der vorhergehenden Ansprüche, **dadurch gekennzeichnet, dass** die Empfängereinheit (16) den Strahlungsempfänger (17) mit integrierter Optikeinrichtung umfasst.

6. Sensoreinrichtung nach einem der vorhergehenden Ansprüche, **dadurch gekennzeichnet, dass** die Sendeeinheit (12) den Strahlungssender (13) aufweist, der in seinem Nahbereich von einer optisch wirksamen Fläche (14) umgeben ist.

7. Sensoreinrichtung nach einem der vorhergehenden Ansprüche, **dadurch gekennzeichnet, dass** die Empfängereinheit (16) den Strahlungsempfänger (17) aufweist, der in seinem Nahbereich von einer optisch wirksamen Fläche (18) umgeben ist.

8. Sensoreinrichtung nach einem der vorhergehenden Ansprüche, **dadurch gekennzeichnet, dass** die Sendeeinheit (12) einen Strahlungsleitkörper (30) aufweist.

9. Sensoreinrichtung nach einem der vorhergehenden Ansprüche, **dadurch gekennzeichnet, dass** die Empfängereinheit (16) einen Strahlungsleitkörper (31) aufweist.

10. Sensoreinrichtung nach Anspruch 9, **dadurch gekennzeichnet, dass** der Strahlungsleitkörper (30, 31) innerhalb der optisch wirksamen Fläche (14, 18) angeordnet ist.

11. Sensoreinrichtung nach einem der Ansprüche 9 oder 10, **dadurch gekennzeichnet, dass** der Strahlungsleitkörper (30, 31) getrennt von dem Sensorkörper (11) ist.

12. Sensoreinrichtung nach einem der vorhergehenden Ansprüche, **dadurch gekennzeichnet, dass** die Sendeeinheit (12) und die Empfängereinheit (16) in einem oberflächennahen Bereich (22) einer Stirnfläche (20) des Sensorkörpers (11) angeordnet sind.

13. Sensoreinrichtung nach einem Anspruch 12, **dadurch gekennzeichnet, dass** die Sendeeinheit (12) und/oder die Empfängereinheit (16) mit ihrer Strahlungsaustrittsfläche (19) im Wesentlichen mit der Stirnfläche (20) fluchtet.

14. Sensoreinrichtung nach einem der vorhergehenden Ansprüche, **dadurch gekennzeichnet, dass** der Sensorkörper (11) mit seiner Mantelfläche (23) außerhalb des Strahlengangs (24) liegt:

15. Sensoreinrichtung nach einem der Ansprüche 12 oder 13, **dadurch gekennzeichnet, dass** zwischen Sendeeinheit (12) und Empfängereinheit (16) mindestens eine isolierte Erhebung (26) der Stirnfläche (20) so angeordnet ist, **dass** von der Sendeeinheit (12) ausgehende und auf die Empfängereinheit (16) gerichtete Strahlung durch die Erhebung (26) tritt.

16. Sensoreinrichtung nach Anspruch 15, **dadurch gekennzeichnet, dass** die Erhebung (26) um eine Symmetrieachse (25) angeordnet ist, wobei Sendeeinheit (12) und Empfängereinheit (16) zu beiden Seiten der Symmetrieachse (25) angeordnet sind.

17. Sensoreinrichtung nach einem der vorhergehenden Ansprüche, **dadurch gekennzeichnet, dass** entlang des Umfangs des Sensorkörpers (11) eine Mehrzahl von Sendeeinheiten (12) und Empfängereinheiten (16) angeordnet sind.

18. Sensoreinrichtung nach einem der vorhergehenden Ansprüche, **dadurch gekennzeichnet, dass** die Stirnfläche (20) einen Freiform-Querschnitt aufweist.

19. Sensoreinrichtung nach einem der vorhergehenden Ansprüche, **dadurch gekennzeichnet, dass** der Sensorkörper (11) als Spritzgussteil ausgebildet ist.

20. Sensoreinrichtung nach einem der vorhergehenden Ansprüche, **dadurch gekennzeichnet, dass** der Sensorkörper (11), eine oder mehrere Sendeeinheiten(12) und/oder eine oder mehrere Empfängereinheiten (16) aufweist, die in einem einzigen Spritzgussteil integriert sind.

21. Sensoreinrichtung nach einem der vorhergehenden Ansprüche, **dadurch gekennzeichnet, dass** innerhalb des Sensorkörpers (11) weitere Sensoren oder Funktionseinheiten integriert sind.

22. Sensoreinrichtung nach einem der vorhergehenden Ansprüche, **dadurch gekennzeichnet, dass** innerhalb der Sensoreinrichtung (10) eine Auswerteinheit für Sensorsignale integriert ist.

23. Sensoreinrichtung nach einem der vorhergehenden Ansprüche, **dadurch gekennzeichnet, dass** mehrere Strahlungssender (13) und/oder Strahlungsempfänger (17) innerhalb einer Sendeeinheit (12) und/oder einer Empfängereinheit (16) angeordnet sind.

24. Sensoreinrichtung nach einem der vorhergehenden Ansprüche, **dadurch gekennzeichnet, dass** die Austrittsfläche (15) der einen oder mehreren Sendeeinheiten (12) und/oder die Eintrittsfläche (19) der einen oder mehreren Empfängereinheiten (16) aneinander grenzen oder überlappen.

25. Sensoreinrichtung nach einem der vorhergehenden Ansprüche, **dadurch gekennzeichnet, dass** die Austrittsfläche (15) und/oder die Eintrittsfläche (19) im Wesentlichen die gesamte Stirnfläche (20) des Sensorkörpers (11) einnehmen.

26. Verwendung einer Sensoreinrichtung (10) nach einem der vorhergehenden Ansprüche in oder mit einem anderen Sensor, insbesondere einem Helligkeitssensor, oder in einem System, insbesondere einer Lichtscheibe einer Leuchte eines Fahrzeugs, oder integriert in oder mit einer Funktionseinheit, insbesondere einer Leuchtsignalfunktionseinheit.

27. Fahrzeugleuchte mit einer Sensoreinrichtung (10) nach einem der Ansprüche 1 bis 25.

## Claims

1. Sensor device having at least one transmitter unit (12) arranged inside a sensor body (11) and at least one receiver unit (16) assigned to the transmitter unit (12) and arranged inside the sensor body (11), and a test surface (15, 19) arranged between the transmitter unit (12) and the receiver unit (16), **characterized in that** the transmitter unit (12) and/or the receiver unit (16) is formed from an injection-moulded part with inlaid transmitter (13) and/or receiver (17), the test surface (15, 19) being formed by an exit surface (15) of the transmitter unit (12) and an entry surface (19) of the receiver unit (16).

2. Sensor device according to Claim 1, **characterized in that** several transmitter units (12) and/or several receiver units (16) and/or a combination of one or more transmitter units (12) and of one or more receiver units (16) are arranged inside an injection-moulded part.

3. Sensor device having at least one transmitter unit (12) arranged inside a sensor body (11) and at least one receiver unit (16) assigned to the transmitter unit (12) and arranged inside the sensor body (11), and a test surface (15, 19) arranged between the transmitter unit (12) and the receiver unit (16), **characterized in that** light emitted from the transmitter unit (12) to the receiver unit (16) runs substantially in an optical path (24) outside the sensor body (11) and the test surface (15, 19) is formed by an exit surface (15) of the transmitter unit (12) and an entry surface (19) of the receiver unit (16).

4. Sensor device according to one of the previous claims, **characterized in that** the transmitter unit (12) comprises the transmitter (13) with integrated optical device.

5. Sensor device according to one of the previous claims, **characterized in that** the receiver unit (16) comprises the receiver (17) with integrated optical device.

6. Sensor device according to one of the previous claims, **characterized in that** the transmitter unit (12) has the transmitter (13) that is surrounded in its vicinity by an optically active surface (14).

7. Sensor device according to one of the previous claims, **characterized in that** the receiver unit (16) has the receiver (17) that is surrounded in its vicinity by an optically active surface (18).

8. Sensor device according to one of the previous claims, **characterized in that** the transmitter unit (12) has a radiation conducting body (30).

9. Sensor device according to one of the previous claims, **characterized in that** the receiver unit (16) has a radiation conducting body (31).

10. Sensor device according to Claim 9, **characterized in that** the radiation conducting body (30, 31) is arranged inside the optically active surface (14, 18).

11. Sensor device according to one of Claims 9 or 10, **characterized in that** the radiation conducting body (30, 31) is separate from the sensor body (11).

12. Sensor device according to one of the previous claims, **characterized in that** the transmitter unit (12) and the receiver unit (16) are arranged in an area (22) close to the surface of an outer face (20) of the sensor body (11).

13. Sensor device according to Claim 12, **characterized in that** the exit surface (19) of the transmitter unit (12) and the receiver unit (16) is substantially flush with the outer face (20).

14. Sensor device according to one of the previous claims, **characterized in that** the lateral surface (23) of the sensor body (11) is outside the optical path (24).

15. Sensor device according to one of Claims 12 or 13, **characterized in that** an insulated elevated portion (26) of the outer face (20) is arranged between the transmitter unit (12) and the receiver unit (16) such that light emitted by the transmitter unit (12) and directed at the receiver unit (16) passes through the elevated portion (26).

16. Sensor device according to Claim 15, **characterized in that** the elevated portion (26) is arranged about a symmetry axis (25), the transmitter unit (12) and the receiver unit (16) being arranged on both sides of the symmetry axis (25).

17. Sensor device according to one of the previous claims, **characterized in that** a plurality of transmitter units (12) and receiver units (16) is arranged along the circumference of the sensor body (11).

18. Sensor device according to one of the previous claims, **characterized in that** the outer face (20) has a free-form cross-section.

19. Sensor device according to one of the previous claims, **characterized in that** the sensor body (11) is designed as an injection-moulded part.

20. Sensor device according to one of the previous claims, **characterized in that** the sensor body (11) has one or more transmitter units (12) and/or one or more receiver units (16) that are integrated into a single injection-moulded part.

21. Sensor device according to one of the previous claims, **characterized in that** further sensors or function units are integrated into the sensor body (11).

22. Sensor device according to one of the previous claims, **characterized in that** an evaluation unit for sensor signals is integrated into the sensor device (10).

23. Sensor device according to one of the previous claims, **characterized in that** several transmitters (13) and/or receivers (17) are arranged inside a transmitter unit (12) and/or a receiver unit (16).

24. Sensor device according to one of the previous claims, **characterized in that** the exit surface (15) of the one or more transmitter units (12) and/or the entry surface (19) of the one or more receiver units (16) abut or overlap.

25. Sensor device according to one of the previous claims, **characterized in that** the exit surface (15) and/or the entry surface (19) substantially take up the entire outer face (20) of the sensor body (11).

26. Use of a sensor device (10) according to one of the previous claims inside or with another sensor, in particular a brightness sensor, or inside a system, in particular a light disc of a vehicle light, or integrated into or with a function unit, in particular a light signal function unit.

27. Vehicle light with a sensor device (10) according to one of Claims 1 to 25.

## Revendications

1. Dispositif de détection avec au moins une unité de transmission (12) logée à l'intérieur d'un corps de capteur (11) et au moins une unité de réception (16) couplée à l'unité de transmission (12) et logée à l'intérieur du corps de capteur (11), ainsi qu'une surface de contrôle (15, 19) disposée entre l'unité de transmission (12) et l'unité de réception (16), **caractérisé en ce que** l'unité de transmission (12) et/ou l'unité de réception (16) est constituée d'une pièce moulée par injection dans laquelle est/sont logé(s) un émetteur de rayonnement (13) et/ou un récepteur de rayonnement (17), sachant que la surface de contrôle (15, 19) est formée par une surface de sortie (15) de l'unité de transmission (12) et une surface d'entrée (19) de l'unité de réception (16).

2. Dispositif de détection selon la revendication 1, **caractérisé en ce que** plusieurs unités de transmission (12) et/ou plusieurs unités de réception (16) et/ou une combinaison d'une ou plusieurs unités de transmission (12) et d'une ou plusieurs unités de réception (16) sont disposées à l'intérieur d'une pièce moulée par injection.

3. Dispositif de détection avec au moins une unité de transmission (12) logée à l'intérieur d'un corps de capteur (11) et au moins une unité de réception (16) couplée à l'unité de transmission (12) et logée à l'intérieur du corps de capteur (11), ainsi qu'une surface de contrôle (15, 19) disposée entre l'unité de transmission (12) et l'unité de réception (16), **caractérisé en ce qu'**un rayonnement émis par l'unité de transmission (12) vers l'unité de réception (16) se déplace essentiellement sur une trajectoire (24) extérieure au corps de capteur (11) et que la surface de contrôle (15, 19) est formée par une surface de sortie (15) de l'unité de transmission (12) et une surface d'entrée (19) de l'unité de réception (16).

4. Dispositif de détection selon une des revendications précédentes, **caractérisé en ce que** l'unité de transmission (12) comprend l'émetteur de rayonnement (13) avec dispositif optique intégré.

5. Dispositif de détection selon une des revendications précédentes, **caractérisé en ce que** l'unité de réception (16) comprend le récepteur de rayonnement (17) avec dispositif optique intégré.

6. Dispositif de détection selon une des revendications précédentes, **caractérisé en ce que** l'unité de transmission (12) présente l'émetteur de rayonnement (13) qui est entouré dans sa zone d'action immédiate d'une surface optiquement active (14).

7. Dispositif de détection selon une des revendications précédentes, **caractérisé en ce que** l'unité de réception (16) présente le récepteur de rayonnement (17) qui est entouré dans sa zone d'action immédiate d'une surface optiquement active (18).

8. Dispositif de détection selon une des revendications précédentes, **caractérisé en ce que** l'unité de transmission (12) présente un conducteur de rayonnement (30).

9. Dispositif de détection selon une des revendications précédentes, **caractérisé en ce que** l'unité de réception (16) présente un conducteur de rayonnement (31).

10. Dispositif de détection selon la revendication 9, **caractérisé en ce que** le conducteur de rayonnement (30, 31) est disposé à l'intérieur de la surface optiquement active (14, 18).

11. Dispositif de détection selon une des revendications 9 ou 10, **caractérisé en ce que** le conducteur de rayonnement (30, 31) est séparé du corps de capteur (11).

12. Dispositif de détection selon une des revendications précédentes, **caractérisé en ce que** l'unité de transmission (12) et l'unité de réception (16) sont disposées dans une zone (22) d'une face frontale (20) du corps de capteur (11) à proximité de la surface.

13. Dispositif de détection selon la revendication 12, **caractérisé en ce que** l'unité de transmission (12) et/ou l'unité de réception (16) s'aligne(nt) essentiellement à la face frontale (20) avec sa/leur surface de sortie de rayonnement (19).

14. Dispositif de détection selon une des revendications précédentes, **caractérisé en ce que** la surface latérale (23) du corps de capteur (11) se trouve en dehors de la trajectoire de rayonnement (24).

15. Dispositif de détection selon une des revendications 12 ou 13, **caractérisé en ce qu'**au moins une élévation isolée (26) de la face frontale (20) est disposée de telle manière entre l'unité de transmission (12) et l'unité de réception (16) que le rayonnement émanant de l'unité de transmission (12) en direction de l'unité de réception (16) passe par l'élévation (26).

16. Dispositif de détection selon la revendication 15, **caractérisé en ce que** l'élévation (26) est disposée autour d'un axe de symétrie (25), sachant que l'unité de transmission (12) et l'unité de réception (16) sont disposées de part et d'autre de l'axe de symétrie (25).

17. Dispositif de détection selon une des revendications précédentes, **caractérisé en ce que** plusieurs unités de transmission (12) et plusieurs unités de réception (16) sont disposées le long de la circonférence du corps de capteur (11).

18. Dispositif de détection selon une des revendications précédentes, **caractérisé en ce que** la face frontale (20) présente une coupe transversale de forme libre.

19. Dispositif de détection selon une des revendications précédentes, **caractérisé en ce que** le corps de capteur (11) est conçu en tant que pièce moulée par injection.

20. Dispositif de détection selon une des revendications précédentes, **caractérisé en ce que** le corps de capteur (11) présente une ou plusieurs unités de transmission (12) et/ou une ou plusieurs unités de réception (16) qui sont intégrées dans une seule pièce moulée par injection.

21. Dispositif de détection selon une des revendications précédentes, **caractérisé en ce que** d'autres capteurs ou unités fonctionnelles sont intégrées à l'intérieur du corps de capteur (11).

22. Dispositif de détection selon une des revendications précédentes, **caractérisé en ce qu'**une unité d'analyse des signaux de capteur est intégrée dans le dispositif de détection (10).

23. Dispositif de détection selon une des revendications précédentes, **caractérisé en ce que** plusieurs émetteurs de rayonnement (13) et/ou récepteurs de rayonnement (17) sont disposés à l'intérieur d'une unité de transmission (12) et/ou d'une unité de réception (16).

24. Dispositif de détection selon une des revendications précédentes, **caractérisé en ce que** la surface de sortie (15) de l'unité de transmission ou des unités de transmission (12) et/ou la surface d'entrée (19) de l'unité de réception ou des unités de réception (16) sont attenantes ou se chevauchent.

25. Dispositif de détection selon une des revendications précédentes, **caractérisé en ce que** la surface de sortie (15) et/ou la surface d'entrée (19) prennent essentiellement toute la surface frontale (20) du corps de capteur (11).

26. Utilisation d'un dispositif de détection (10) selon une des revendications précédentes, dans ou avec un autre capteur, en particulier un capteur de luminosité, ou dans un système, en particulier dans le diffuseur d'un phare de véhicule, ou intégré dans ou avec une unité fonctionnelle, en particulier une unité fonctionnelle de signalement lumineux.

27. Phare de véhicule avec un dispositif de détection (10) selon une des revendications 1 à 25.
